# FASCICULE DE BREVET EUROPEEN

(11) **EP 0 707 199 B1**
(45) Date de publication et mention de la délivrance du brevet: **15.01.2003**
(21) Numéro de dépôt: 95402248.9
(22) Date de dépôt: 09.10.1995
(51) Int. Cl.: G01F 1/82

(54) **Procédé pour la mesure d'un débit de fluide ainsi que les installations pour la mise en oeuvre de ce procédé**
Verfahren zur Messung der Durchflussrate einer Flüssigkeit und Vorrichtung zu seiner Durchführung
Method and device for measuring the flow rate of a fluid

(30) Priorité: 10.10.1994 FR 9412074
(43) Date de publication de la demande: 17.04.1996
(73) Titulaire: ETABLISSEMENTS FAURE-HERMAN, Courtaboeuf (Essonne) (FR)
(72) Inventeur: Denis, Michel, F-78370 Plaisir (FR)
(74) Mandataire: Cabinet HERRBURGER

(56) Documents cités:
- EP-A- 0 101 804
- CH-A- 360 815
- DE-B- 1 266 994
- US-A- 2 882 727
- US-A- 3 144 769
- US-A- 4 012 957

## Description

La présente invention concerne un procédé pour la mesure d'un débit massique de fluide selon le préambule de la revendication 1.

L'invention concerne également une installation pour la mise en oeuvre de ce procédé selon la revendication 4.

On connaît déjà des installations qui comprennent un débitmètre massique, relié à un ensemble électronique assurant l'exploitation des informations délivrées par le débitmètre, afin d'indiquer la valeur massique du débit de fluide.

Le débitmètre massique comporte deux hélices montées à rotation l'une derrière l'autre à l'intérieur d'un corps de débitmètre, ces deux hélices étant reliées par un ressort de façon que le fluide qui s'écoule dans le corps de la turbine introduise un décalage angulaire entre les deux hélices, décalage qui est proportionnel au couple exercé par les deux hélices l'une et l'autre par l'intermédiaire du ressort.

On démontre que ce décalage angulaire est uniquement fonction du débit-masse du fluide qui s'écoule dans la turbine et de la force du ressort.

Pour mesurer ce décalage angulaire et donc obtenir une indication fonction du débit-masse, on détecte le passage d'une pale de chacune des hélices devant un point fixe du corps à l'aide d'un aimant fixé sur une pale de ces deux hélices, ces aimants induisant, à chaque rotation, des tensions dans le solénoïde du débitmètre en regard des hélices.

Pour plus de détails sur ce mode de mesure connu d'un débit massique, on se reportera au document US 3 144 769. Il est également connu d'appliquer ce principe selon le document CH 360 815.

L'inconvénient de ce débitmètre réside dans le fait qu'il ne permet pas une mesure du débit lors de régimes transitoires à variation importante de débit, comme cela se produit par exemple sur les avions lors de la mise en route, lors des accélérations et notamment lors des décollages. Ces débitmètres ne peuvent donc pas valablement être mis en oeuvre pour assurer la régulation du fonctionnement d'un moteur et en l'occurrence d'un moteur d'avion puisque pendant cette période transitoire les informations de mesure de débit-masse qu'ils fournissent sont incorrectes.

Pour remédier à ces inconvénients et améliorer la précision de mesure du débitmètre lors de régimes transitoires, on aurait pu envisager de multiplier la fréquence des mesures en prévoyant des aimants sur plusieurs pales des deux hélices mais cela aurait abouti à une autre erreur car l'amplitude du décalage temporel aurait, dans ce cas, été fortement diminuée suivant une fonction inverse du nombre de pales, d'où une augmentation de l'influence des erreurs liées à la réalisation de l'horloge de l'ensemble électronique, à la précision de l'instant de détection de chaque pale des deux hélices, aux différents écartements des pales, etc.

Une telle solution ne peut donc pas non plus être envisagée.

La présente invention a pour but de développer un procédé permettant de mesurer un débit massique de fluide, qui possède une bonne précision de mesure même pendant les régimes transitoires, de façon que les mesures produites puissent valablement être utilisées pour assurer la régulation d'un moteur.

Elle concerne, à cet effet, un procédé pour la mesure du débit d'un fluide à l'aide d'un débitmètre massique comportant deux hélices couplées par un ressort et associées chacune à un capteur, procédé caractérisé par les caractéristiques de la première revendication. D'autres caractéristiques font l'objet de revendications dépendantes.

On réalise l'appairage de la première paire de pales en produisant, dans les capteurs, par l'aimant de l'une des pales des deux hélices, un signal de détection différent de celui produit par les autres pales pourvues d'un aimant.

L'invention est représentée sur les dessins ci-joints dans lesquels :
- la figure 1 est une vue schématique d'un débitmètre massique pour la mise en oeuvre de l'invention.
- la figure 2 représente, sous la forme d'un diagramme établi en fonction du temps, le procédé de l'invention.

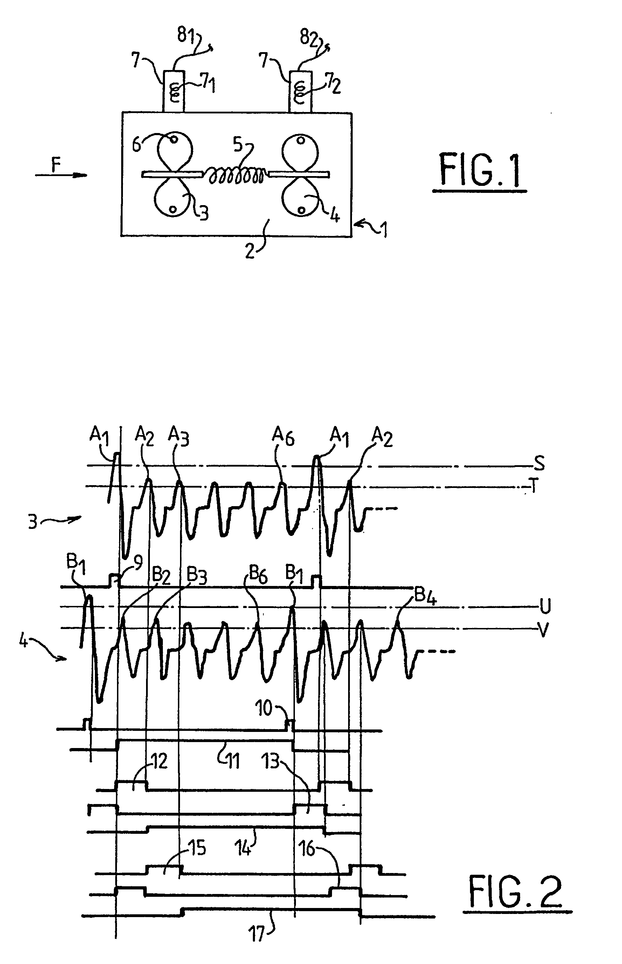

Sur la figure 1, un débitmètre massique 1 comporte un corps 2 à l'intérieur duquel deux hélices 3 et 4 sont montées à rotation l'une derrière l'autre. Ces hélices sont reliées par un ressort hélicoïdal 5 de façon que le fluide qui s'écoule dans le corps 2 dans le sens de la flèche F entraîne les deux hélices en rotation en produisant, sur ces hélices, un décalage temporel fonction de la masse du fluide qui s'écoule dans le corps 2.

Conformément à l'invention, au moins deux des pales de chaque hélice 3, 4 comportent un aimant 6 de façon que chacune de ces pales, en passant devant les bobinages des capteurs 71, 72, induisent dans ces bobinages des tensions se traduisant par des signaux. Ces signaux sont transmis par des conducteurs 81, 82 à un ensemble électronique comportant un calculateur et délivrant la valeur massique du débit de fluide.

Suivant l'invention, on prévoit un aimant sur au moins deux pales de chaque hélice 3, 4 et, de préférence, sur la totalité des pales, on appaire chacune de ces pales de l'une des hélices 3 avec une des pales de l'autre hélice 4, afin de mesurer le décalage temporel des pales ainsi appairées 32-42 pour l'ensemble de ces paires de pales.

Suivant la figures 2, on a illustré ce procédé en considérant que chaque hélice 3, 4 du débitmètre1 1 comporte six pales pourvues chacune d'un aimant 6 l'appairage étant obtenu en différenciant le signal obtenu par le couple bobine-aimant sur l'une des pales de chaque hélice et en déduisant en cascade l'appairage des pales successives des deux hélices par l'instant de détection de la pale suivante de chaque hélice par les bobines 71, 72 des capteurs.

Pour réaliser l'appairage de la première paire, il est prévu, suivant l'exemple représenté, d'obtenir de l'une des pales de chaque hélice 3, 4, un signal de détection différent de celui produit par les autres pales et, en l'occurrence, de produire sur cette pale de chaque hélice en signal A1, B1 d'amplitude plus importante.

Ce résultat pourra être obtenu en disposant sur ces deux pales des deux hélices, un aimant de section plus importante, de pouvoir magnétique plus important, ou encore disposé à une distance plus proche des bobines 71, 72 que les autres aimants de ces hélices 3, 4.

Ainsi, sur la figure 2, on remarque que les signaux A1, B1, produits par l'une 31, 41 des pales des deux hélices 3, 4 sont plus importants que les signaux A2, A3...A6, B2, B3...B6, produits par les cinq autres pales de ces deux hélices 3, 4.

L'ensemble électronique comporte des moyens de discrimination de seuils à portes logiques détectant pour l'hélice 3 le signal d'amplitude A1 au niveau S et les signaux d'amplitude A2 à A6 au niveau T et pour la pale 41 de l'hélice 4, le signal d'amplitude B1 au niveau U et les signaux d'amplitude B2 à B6 au niveau V.

Les signaux A1 et B1 donnent, dans l'ensemble électronique, en fonction des niveaux S et U, des signaux carrés pour l'appairage de la première paire de référence. L'ensemble électronique produit alors à partir de ces deux impulsions une impulsion I1 dont la durée est significative du décalage temporel des deux premières pales ainsi appairées des deux hélices 3, 4.

L'ensemble électronique détermine également, à partir des signaux différenciés A1 et B1, l'appairage de la seconde paire d'hélices 32, 42 en détectant les signaux A2 et B2 produits par ces pales suivantes. L'ensemble électronique génère les signaux 12 et 13 dont le décalage temporel est représenté par la durée du signal 14.

La même opération se produit pour l'appairage des pales suivantes des deux hélices 3, 4 en produisant, à partir des signaux A2, B2, et compte tenu des signaux A3, B3, les signaux 15 et 16 respectivement dont le décalage temporel est représenté par la durée de l'impulsion 17.

Le procédé se poursuit de la même manière pour l'appairage des pales suivantes des deux hélices 3, 4, par les signaux A4-B4, A5-B5 et A6-B6 de façon à obtenir pour une hélice de six pales comportant chacune un aimant, six mesures de décalage temporel par tour d'hélice de façon à multiplier par six la fréquence, de cette mesure et de permettre de donner une mesure précise du débit massique, même pour des régimes transitoires extrêmement brefs et à réaction rapide de régime, du fait que la durée du décalage temporel reste importante par rapport aux erreurs possibles. L'appairage pourra, en effet, être réalisé pour que le décalage soit d'une valeur proche de la durée d'une révolution et même de plusieurs révolutions si on incrémente les mesures pour tenir compte, dans l'ensemble électronique 9, du nombre de tours entiers de décalage.

## Revendications

1. Procédé pour la mesure du débit d'un fluide à l'aide d'un débitmètre massique (1) comportant deux hélices (3, 4) ayant des pales, ces hélices étant couplées par un ressort (5) et chacune des hélices (3, 4) est associée à un capteur électromagnétique (71, 72) pour détecter la rotation,
procédé **caractérisé en ce que**
- on munit au moins deux pales de chaque hélice (3, 4) d'un aimant,
- on appaire chacune des pales munie d'un aimant d'une hélice (3) à une pale équipée d'un aimant de l'autre hélice (4)
■ en appairant la première paire de pales en produisant dans les capteurs (71, 72) par l'aimant de la pale correspondante de chacune des hélices (3, 4), un signal de détection différent des signaux produits par les autres pales pourvues d'un aimant,
■ en formant les paires suivantes en cascade en déterminant pour les deux hélices l'instant de détection par les capteurs de la pale suivante pourvue d'un aimant.

2. Procédé conforme à la revendication 1,
**caractérisé en ce que**
le signal produit par les aimants de l'une des pales des deux hélices (3, 4) est d'amplitude différente des signaux produits par les autres pales.

3. Procédé selon la revendication 1,
**caractérisé en ce que**
l'on munit chacune des pales de chaque hélice (3, 4) d'un aimant.

4. Débitmètre massique comportant deux hélices (3, 4) couplées par un ressort (5) et associées chacune à un capteur (71, 72),
**caractérisé en ce qu'**
au moins deux pales de chaque hélice (3, 4) comportent un aimant et un aimant de chaque hélice (3, 4) génère un signal différent des autres aimants de chaque hélice (3, 4) dans le capteur (71, 72) associé.

## Patentansprüche

1. Verfahren zum Messen der Durchflussrate einer Flüssigkeit mit Hilfe eines Massendurchflussmessers (1) mit zwei Schnecken (3, 4), die Flügel aufweisen, wobei die Schnecken durch eine Feder (5) gekoppelt sind und jede der Schnecken (3, 4) einem elektromagnetischen Aufnehmer (71, 72) zum Erfassen der Drehung zugeordnet ist, **dadurch gekennzeichnet, dass**
- wenigstens zwei Flügel jeder Schnecke (3, 4) mit einem Magneten ausgestattet werden,
- jedem mit einem Magneten versehenen Flügel einer Schnecke (3) ein mit einem Magneten versehener Flügel der anderen Schnecke (4) paarweise zugeordnet wird,
■ wobei die Zuordnung zwischen dem ersten Paar von Flügeln hergestellt wird, indem in den Aufnehmern (71, 72) durch den Magneten des entsprechenden Flügels jeder Schnecke (3, 4) ein Erfassungssignal erzeugt wird, das sich von den Signalen unterscheidet, die von den anderen mit einem Magneten versehenen Flügeln erzeugt werden,
■ wobei die folgenden hintereinander geschalteten Paare gebildet werden, indem für die zwei Schnecken der Zeitpunkt der Erfassung des folgenden mit einem Magneten versehenen Flügels durch die Aufnehmer bestimmt wird.

2. Verfahren nach Anspruch 1, **dadurch gekennzeichnet, dass** das von den Magneten eines der Flügel der zwei Schnecken (3, 4) erzeugte Signal eine andere Amplitude als die von den anderen Flügeln erzeugten Signale hat.

3. Verfahren nach Anspruch 1, **dadurch gekennzeichnet, dass** jeder Flügel jeder Schnecke (3, 4) mit einem Magneten versehen wird.

4. Massendurchflussmesser mit zwei durch eine Feder (5) gekoppelten und jeweils einem Aufnehmer (71, 72) zugeordneten Schnecken (3, 4), **dadurch gekennzeichnet, dass** wenigstens zwei Flügel jeder Schnecke (3, 4) einen Magneten aufweisen, und dass ein Magnet jeder Schnecke (3, 4) ein Signal in dem zugeordneten Aufnehmer (71, 72) erzeugt, das sich von dem der anderen Magnete jeder Schnecke (3, 4) unterscheidet.

## Claims

1. Method of measuring the flow rate of a fluid by means of a mass flow meter (1) comprising two propellers (3, 4) with blades, these propellers being coupled by means of a spring (5), and each of the propellers (3, 4) cooperates with an electromagnetic sensor (71, 72) in order to detect rotation,
said method being **characterised in that**
- at least two blades of each propeller (3, 4) are fitted with a magnet,
- each of the blades of a propeller (3) fitted with a magnet is paired with a blade fitted with a magnet of the other propeller (4),
- the first pair of blades being paired so as to produce in the sensors (71, 72), via the magnet of the corresponding blade of each of the propellers (3, 4), a detection signal that is different from the signals produced by the other blades fitted with a magnet,
- the subsequent pairs being set up in a cascade arrangement determining, for the two propellers, the instant at which the sensors detect the subsequent blade fitted with a magnet.

2. Method as claimed in claim 1,
**characterised in that**
the signal produced by the magnets of one of the blades of the two propellers (3, 4) is of a different amplitude from the signals produced by the other blades.

3. Method as claimed in claim 1,
**characterised in that**
each of the blades of each propeller (3, 4) is fitted with a magnet.

4. Mass flow meter comprising two propellers (3, 4) coupled by a spring (5) and each co-operating with a sensor (71, 72),
**characterised in that**
at least two blades of each propeller (3, 4) have a magnet and one magnet of each propeller (3, 4) generates a different signal from the other magnets of each propeller (3, 4) in the co-operating sensor (71, 72).
